# EUROPEAN PATENT APPLICATION

(11) **EP 1 143 724 A1**
(43) Date of publication of application: **10.10.2001**
(21) Application number: 00971794.3
(22) Date of filing: 06.11.2000
(51) Int. Cl.: H04N 7/14, H04M 11/00, H04N 7/18, H04M 1/00

(54) **METHOD AND DEVICE FOR IMAGE TRANSMISSION**

(30) Priority: 05.11.1999 JP 31494999
(71) Applicant: MATSUSHITA ELECTRIC INDUSTRIAL CO., LTD., Kadoma-shi, Osaka 571-8501 (JP)
(72) Inventor: KAYADA, Tadashi, Yokohama-shi, Kanagawa 236-0042 (JP); MACHIDA, Yutaka, Yokohama-shi, Kanagawa 233-0004 (JP); MIYAUCHI, Motoya, Suginami-ku, Tokyo 168-0082 (JP); KUBOTA, Kosuke, Yokosuka-shi, Kanagawa 239-0828 (JP); YUKITAKE, Takeshi, Yokohama-shi, Kanagawa 241-0817 (JP)
(74) Representative: Grünecker, Kinkeldey, Stockmair & Schwanhäusser Anwaltssozietät
(86) International application number: JP0007780
(87) International publication number: WO0133850

(57) **Abstract**

An image communication apparatus 100 receives a signal transmitted via a transmission channel and demodulates the signal at a receiving section 101, and further compresses the demodulated signal and converts it to coded data. Coded data converted at the receiving section 101 is decoded by a video decoding section 102, and an image area converting section 103 converts the decoded data such that an image is displayed in an erect state on a display area at an arbitrary portion that fits in the whole display area of a display section 104. Then, an image corresponding to image data converted by the image area converting section 103 is displayed on the display section 104.

## Description

### Technical Field

The present invention relates to an apparatus and a method for performing either reception of an image transmitted as a radio signal or radio transmission of the image or both, and more particularly to an image communication apparatus suitable for use in a mobile station apparatus such as a cellular phone or a portable visual telephone apparatus in a mobile communication system, an information terminal apparatus having a personal computer function and the like and its image communication method.

### Background Art

Conventionally, this kind of the image communication apparatus and that of the image communication method are described in Unexamined Japanese Patent Publication HEI 8-275240.

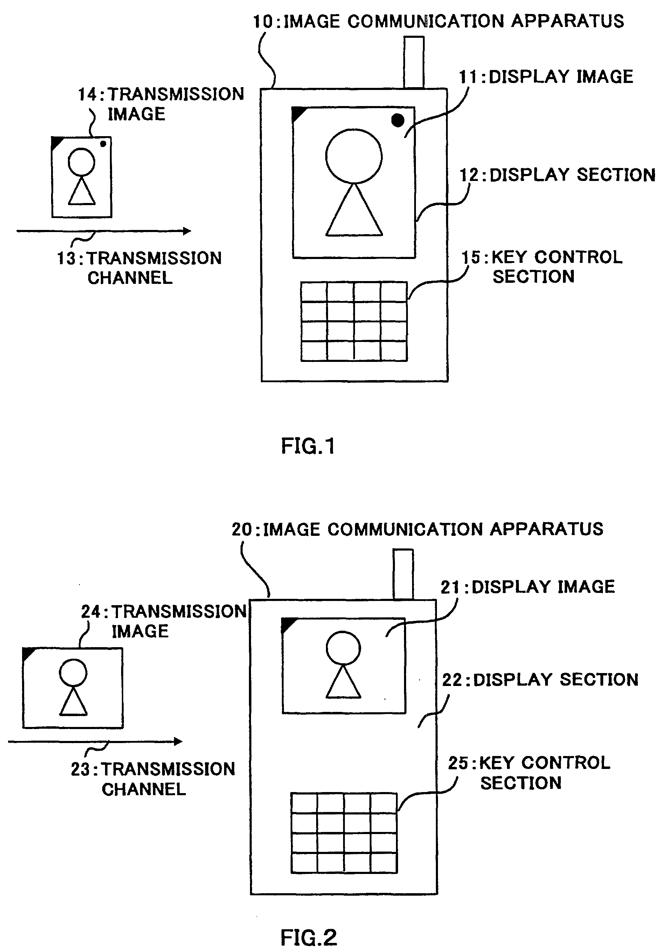

FIG. 1 is a schematic outline configuration view of the conventional image communication apparatus, and FIG. 2 is a schematic outline configuration view of the other conventional image communication apparatus.

An image communication apparatus 10 illustrated in FIG. 1 has a vertical liquid crystal display mounted on a display section 12 that displays a display image 11. Atransmission image 14 transmitted via a radio transmission channel 13 is vertical image data, and the image communication apparatus 10 displays this vertical image data on the vertical liquid crystal display.

An image communication apparatus 20 illustrated in FIG. 2 has a transverse liquid crystal display mounted on a display section 22 that displays a display image 21. A transmission image 24 transmitted via a radio transmission channel 23 is transverse image data, and the image communication apparatus 20 displays this transverse image data on the transverse liquid crystal display.

In the case of miniaturizing such image communication apparatuses 10 and 20 to be portable, it is generally considered that they are shaped like a cellular phone. In this case, it is required that a display area should be widened as much as possible for better viewability of the image. In order to meet this requirement, it is considered that the cellular phone has the vertical display device mounted thereon since it has a vertically oblong shape in general. The image communication apparatus having such a vertical display device mounted thereon is illustrated in FIG. 1.

While, regarding the image format, a transverse image format for displaying an image with an aspect ratio of 3:4 or 9:16 is generally used. In the case where vertical image data is transmitted to this transverse image format, image data, which is rotated by rotating vertical image data right or left at 90 . is generated and carried on the transverse image format and transmitted. In FIG. 1, a black circle ● indicates an upper-right position on the image format and a block triangle ▲ indicates an upper-left position of the display image.

Also, the image communication apparatus, which displays one that is obtained by carrying transverse image data on the normal transverse image format to transmit, has a shape as in the image communication apparatus illustrated in FIG. 2.

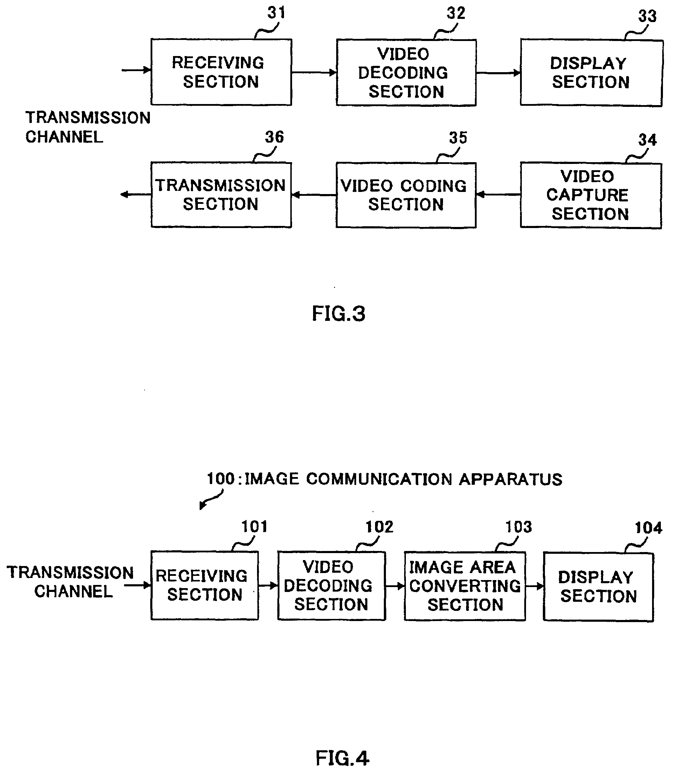

An explanation will be next given of the internal configuration of the image communication apparatus 10 or 20 with reference to FIG. 3.

The image communication apparatus 10 or 20 comprises a receiving section 31, a video decoding section 32, a display section 33 (corresponding to 12 of FIG. 1 or 22 of Fig. 2), a video capture section 34, a video encoding section 35, and a transmitting section 36.

In such a configuration, image data received via a transmission channel is first demodulated by the receiving section 31 to obtain a bit sequence of received data.

This outputted received data is compressed by the technique such as MPEG (Moving Picture coding Experts Group)-4 and the like in order to improve the efficient use of the band at the time of transmission. Received data is decoded by the video decoding section 32, so that displayable bit data is outputted to the display section 33. This outputted image data (bit data) is displayed on the display section 33.

Moreover, at the transmitting side, scenery, person, and the like are image-formed by the video capture section 34, and fetched as received data (image data). This image data is subjected to image compression using image compression system such as MPEG-4 at the video encoding section 35, and further subjected to modulation processing for transmission to the transmission channel at the transmitting section 36, thereafter being transmitted.

Though the above received signal has been explained as image data, image data is generally multiplexed into voice, character information such as text, and is transmitted.

However, in the case where the image communication apparatus 10 illustrated in FIG.1 receives transverse image data and displays it on the display section 12, the image is displayed in a state that it is rotated at 90. . Resultantly, a user uses the image communication apparatus 10 in a state that it is rotated at 90. opposite to the rotational direction of the image, thereby causing a problem in operability at the time of operating key operation section 15 and the like.

Moreover, in the case where the image communication apparatus 20 illustrated in FIG.2 receives vertical image data and displays it on the display section 22, the image is displayed in a state that it is rotated at 90. . Resultantly, the user uses the image communication apparatus 20 in a state that it is rotated at 90. opposite to the rotational direction of the image, thereby causing a problem in operability at the time of operating key operation section 15 and the like.

### Disclosure of Invention

It is an object of the present invention is to provide an image communication apparatus and an image communication method capable of displaying received image data on either vertical or transverse display means by conforming the upper and lower portions of the image to the upper and lower portions of display means even if received image data is either vertical data or transverse data, thereby making it possible to perform a key operation appropriately.

The above object can be attained when the image communication apparatus having vertical or transverse display means (display) converts received image data in such a way that the upper and lower portions of image data are conformed to the upper and lower portions of display means even if image data is either vertical image data or transverse image data, and displays an image corresponding to the converted image data at the time of displaying received image data.

### Brief Description of Drawings

FIG. 1 is a schematic outline configuration view of a conventional image communication apparatus;
FIG. 2 is a schematic outline configuration view of the other conventional image communication apparatus;
FIG. 3 is a block diagram illustrating the internal configuration of the conventional image communication apparatus;
FIG. 4 is a block diagram illustrating the configuration of the image communication apparatus according to the first embodiment of the present invention;
FIG. 5 is a schematic outline configuration view of the image communication apparatus according to the first embodiment of the present invention;
FIG. 6 is a schematic outline configuration view of the image communication apparatus according to the second embodiment of the present invention;
FIG. 7 is a schematic outline configuration view of the image communication apparatus according to the third embodiment of the present invention;
FIG. 8 is a schematic outline configuration view of the image communication apparatus according to the fourth embodiment of the present invention;
FIG. 9 is a schematic outline configuration view of the image communication apparatus according to the fifth embodiment of the present invention;
FIG. 10 is a block diagram illustrating the internal configuration of the image communication apparatus according to the sixth embodiment of the present invention;
FIG. 11 is a schematic outline configuration view of the image communication apparatus according to the sixth embodiment of the present invention;
FIG. 12 is a block diagram illustrating the internal configuration of the image communication apparatus according to the seventh embodiment of the present invention;
FIG. 13 is a block diagram illustrating the internal configuration of the image communication apparatus according to the eighth embodiment of the present invention;
FIG. 14 is a system configuration view illustrating the configuration of a mobile communication system according to a ninth embodiment of the present invention; and

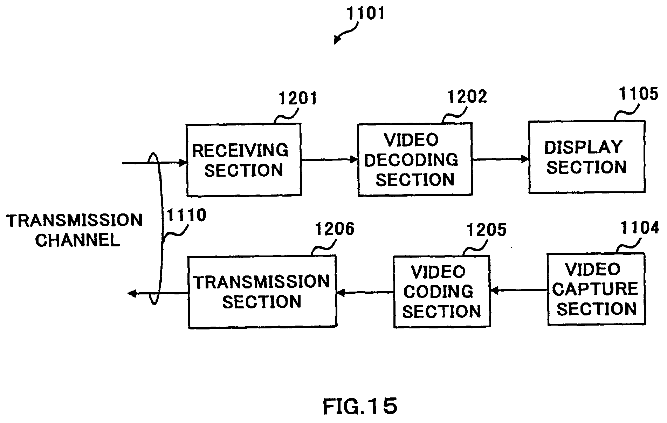

FIG. 15 is a block diagram illustrating the internal configuration of a first image communication apparatus according to a ninth embodiment of the present invention.

### Best Mode for Carrying Out the Invention

The following will specifically explain the best mode of the present invention with reference to the drawings.

The following will specifically explain the embodiments of the present invention with reference to the drawings. Each embodiment explains a specific image converting procedure to attain the object of the present invention.

### (First embodiment)

FIG. 4 is a block diagram illustrating the configuration of the image communication apparatus according to the first embodiment of the present invention.

An image communication apparatus 100 illustrated in FIG. 4 comprises a receiving section 101, a video decoding section 102, an image area converting section 103, and a display section 104.

The receiving section 101 demodulates image data received via a transmission channel to generate coded imaged data, and outputs coded image data generated to the video decoding section 102. The video decoding section 102 decodes coded image data from the receiving section 101, and outputs the decoded image data to the image area converting section 103. Generally, image data is subjected to image compression using image compression system such as MPEG-4 in order to improve the efficient use of the band in the transmission channel. In other words, the video decoding section 102 decodes compressed image data.

The image area converting section 103 converts image data decoded by the video decoding section 102 in such a way that the image is displayed in an erect state on a display area at an arbitrary portion that fits in the whole display area of a vertical or transverse liquid crystal display that forms the display section 104. It is noted that the erect state refers to a state in which the upper and lower portions of the images are conformed to the upper and lower portions of the display section. In order to display received image data in the erect state, the image area converting section 103 does not perform rotation processing for conforming received image data to the shape of the display section (vertical or transverse format) even if the received image data is either vertical image data or transverse image data.

The display section 104 is made up of the vertical or transverse liquid crystal display or plasma display and the like, and displays image data converted by the image area converting section 103.

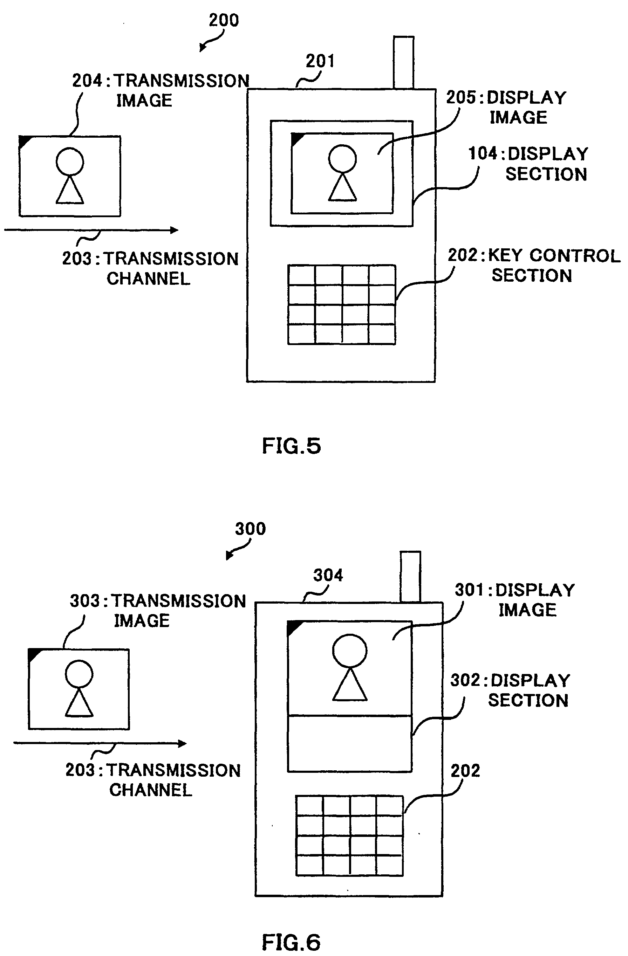

The schematic outline configuration of a cellular phone (or portable visual telephone apparatus) mounting the image communication apparatus 100 with the above-explained internal configuration thereon and having an image display function is illustrated in FIG. 5.

More specifically, a cellular phone 200 illustrated in FIG. 5 comprises a main body (housing) 201 whose shape is an oblong (vertical) rectangular solid, the display section 104 formed at the upper side of the surface of the main body 201, and a key control section 202 with a plurality of keys formed at the lower side.

Moreover, a display image 205 obtained when a transmission image 204 received via a transmission channel 203 is displayed is shown on the display section 104. The transmission image 204 illustrated indicates an image of image data, which is data-transmitted into the transmission channel 203, and a mark ▲ put at the upper left indicates an upper-left position of the image.

According to the above-mentioned configuration, the signal received by the receiving section 101 via the transmission channel is demodulated here, and compressed, whereby being converted to coded data, and coded data is decoded by the video decoding section 102. Further, the image area converting section 103 converts the decoded data in such a way that the image is displayed in an erect state on a display area at an arbitrary portion that fits in the whole display area of the display section 104, and the resultant is displayed on the display section 104.

Thus, according to the image communication apparatus 100 of the first embodiment, even if data of the transmission image 204 is either vertical or transverse format and the display section 104 is either vertical or transverse format, the image 205 can be displayed in the erect state, thereby making it possible to operate the key control section 202 appropriately.

### (Second embodiment)

FIG. 6 is a schematic outline configuration view of the image communication apparatus according to the second embodiment of the present invention. Additionally, in the second embodiment illustrated in FIG. 6, the same reference marks as those of the first embodiment illustrated in FIG. 4 and FIG. 5 are added to the sections corresponding to the respective sections of the first embodiment, and the specific explanation is omitted.

An image communication apparatus 300 of the second embodiment illustrated in FIG. 6 is different from that of the first embodiment in the following point. Namely, at the time of converting image data decoded by the video decoding section 102, the image area converting section 103 performs conversion in such a way that the width of an erect image 301 corresponding to image data is displayed to conform to the width of the display area of a display section 302.

In FIG. 6, the display section 302 is vertically oblongly shaped, and is made up of a vertical liquid crystal display or plasma display and the like. Namely, the display section 302 is a vertical display section. A transmission image 303 is transverse image data.

The reason why the display section 302 is vertical is generally to take up the display area as much as possible with respect to a main body 304. In other words, in the main body 304 having the shape of the cellular phone, the width thereof is normally 50mm or less in most cases, and it is needed that the display area be vertical to take up a wide area as much as possible in order to display the moving image and character information efficiently on the main body 304 with consideration given to operability and portability in which the operation of the key control section 202 can be performed with one hand.

According to the above-mentioned configuration, the signal received by the receiving section 101 via the transmission channel is demodulated here, and compressed, whereby being converted to coded data, and coded data is decoded by the video decoding section 102. Further, the image area converting section 103 converts the decoded data in such a way that the width of the image 301 corresponding to image data is conformed to that of the display area of the display section 302 and the image is displayed in an erect state, and the resultant is displayed on the display section 302.

Thus, according to the image communication apparatus 300 of the second embodiment, since the image data is converted in such a way that the width of the image corresponding to the decoded image data is conformed to that of the display area of the display section 302, it is possible to make full use of the display area and to display the image in the erect state even if data of the transmission image 303 is vertical or transverse format and the display section 302 is either vertical or transverse format. This makes it possible to operate the key control section 202 appropriately.

### (Third embodiment)

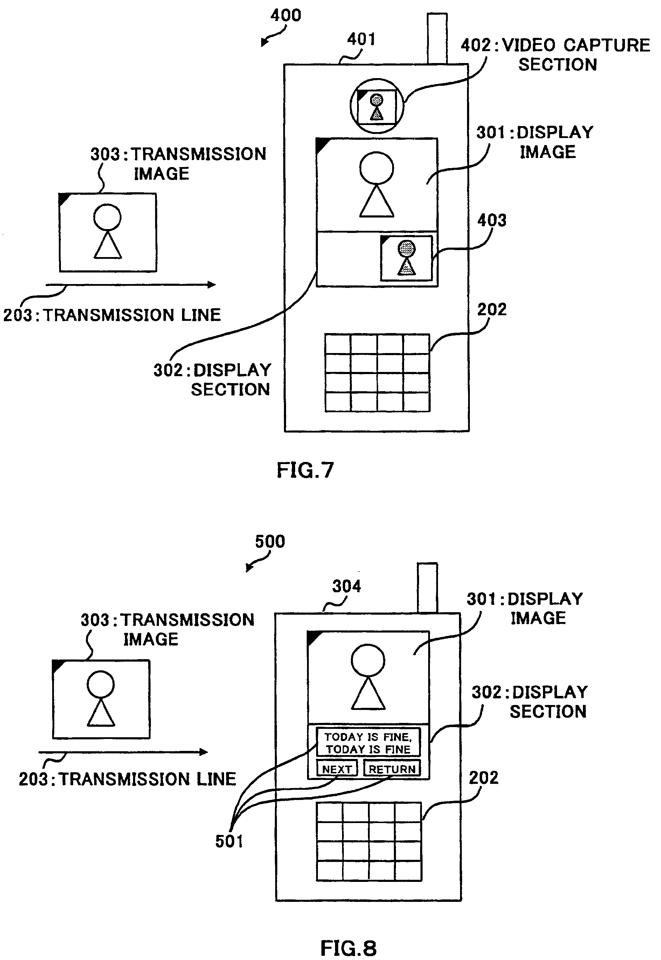

FIG. 7 is a schematic outline configuration view of the image communication apparatus according to the third embodiment of the present invention. Additionally, in the third embodiment illustrated in FIG. 7, the same reference marks as those of the second embodiment illustrated in FIG. 6 are added to the sections corresponding to the respective sections of the second embodiment, and the specific explanation is omitted.

An image communication apparatus 400 of the third embodiment illustrated in FIG.7 is different from the image communication apparatus of the second embodiment illustrated in FIG. 6 in the point that the image communication apparatus 400 has a video capture section (camera) 402 at the upper portion of the display section 302 of a main body 401. Moreover, the difference therebetween lies in the point that the image area converting section 103 performs conversion in such a way that an image 403 (for example, user's self-portrait) formed by the video capture section 402 is displayed not to be overlapped with the display area of the image 302 on the display section 302.

Namely, there is a case in which the transmission image 303 is transverse image data and the display section 302 is the vertical display section. In this case, when the image data thus converted by the image area converting section 103 is displayed on the display section 302, transversely oblong image (image corresponding to transverse image data) is formed on the part (upper or lower portion) of the display area of the display section 302 shaped vertically oblongly. As a result, an image undisplayed area is generated at the lower (or upper) portion of the displayed image 301 displayed on the display section 302. Then, the image 403 formed by the video capture section 402 is displayed on the image undisplayed area.

Thus, according to the image communication apparatus 400 of the third embodiment, the image formed by the apparatus at one station can be monitored and confirmed as displaying the image transmitted by the apparatus at the other station on the display section 302.

### (Forth embodiment)

FIG. 8 is a schematic outline configuration view of the image communication apparatus according to the fourth embodiment of the present invention. Additionally, in the fourth embodiment illustrated in FIG. 8, the same reference marks as those of the second embodiment illustrated in FIG. 6 are added to the sections corresponding to the respective sections of the second embodiment, and the specific explanation is omitted.

An image communication apparatus 500 of the fourth embodiment illustrated in FIG.8 is different from the image communication apparatus of the second embodiment illustrated in FIG. 6 in the point that the image area converting section 103 performs conversion in such a way that text information is displayed not to be overlapped with the display area of the image 301 on the display section 302. It is noted that the image area converting section 103 is unchanged in the point that the transmitted image data is converted in such a way that the image is displayed in the erect state.

Namely, there is a case in which the transmission image 303 is transverse image data and the display section 302 is the vertical format. In this case, when the image data thus converted by the image area converting section 103 is displayed on the display section 302, the transversely oblong image is displayed on the vertically oblong area. Hence, an image undisplayed area is generated at the lower (or upper) portion of the displayed image 301 displayed on the display section 302 and character information (text information) such an operation menu and the like are displayed on the image undisplayed area.

Thus, according to the image communication apparatus 500 of the fourth embodiment, text information can be displayed while the image corresponding to the transmitted image is being displayed on the display section 302, the screen page can be efficiently used.

Additionally, the following way may be possible. Namely, information receiving means such as a browser function and the like that receives text information other than image data is provided, the image area converting section 103 converts image data in the same way as mentioned above, and text information 501 received by information receiving means is displayed not to be overlapped with the display portion of the display image 301 corresponding to image data thus converted. In this case, it is possible to display text information such as browser and the like as displaying corresponding to the transmitted image on the display section 302.

Moreover, even if the characteristic function of the fourth embodiment is applied to the portable visual telephone apparatus of the third embodiment illustrated in FIG. 7, the same effect can be obtained.

### (Fifth embodiment)

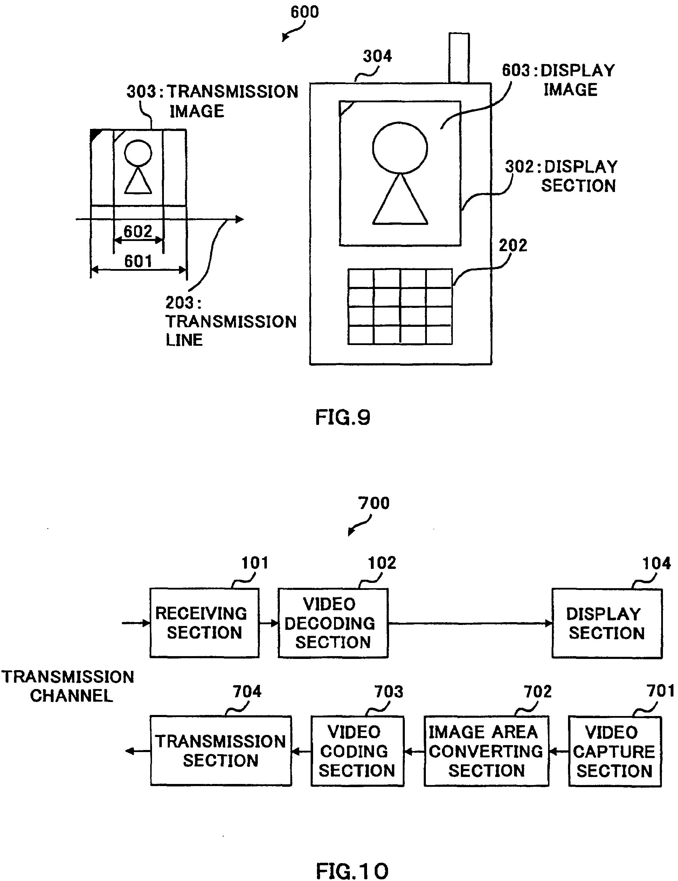

FIG. 9 is a schematic outline configuration view of the image communication apparatus according to the fifth embodiment of the present invention. Additionally, in the fifth embodiment illustrated in FIG. 9, the same reference marks as those of the second embodiment illustrated in FIG. 6 are added to the sections corresponding to the respective sections of the first embodiment, and the specific explanation is omitted.

An image communication apparatus 600 of the fifth embodiment illustrated in FIG.9 is different from the image communication apparatus of the second embodiment illustrated in FIG. 6 in the point that the image area converting section 103 converts image data decoded by the video encoding section 102 in such a way that both end portions of the transmission image 303 with a width 601 is cut to have a desired width and the width of the image 603 with this cut width 602 is conformed to the width of the display area of the display section 302.

Thus, according to the image communication apparatus 600 of the fifth embodiment, extra both end portions (one end portion) of the transmission image 303 are deleted, and the image 603 after such a deletion is displayed on the display section 302. Hence, an arbitrary part (e.g. a part that the user wishes to view) of the transmission image 303 is enlarged and displayed, and this makes the display image easily viewable.

Moreover, even if the characteristic function of the fifth embodiment is applied to the portable visual telephone apparatus of the third embodiment illustrated in FIG. 7, the same effect can be obtained.

### (Sixth embodiment)

FIG. 10 is a schematic outline configuration view of the image communication apparatus according to the sixth embodiment of the present invention. Additionally, the same reference marks as those of the configuration illustrated in FIG. 4 are added to the sections corresponding to the respective sections of FIG. 4 in the sixth embodiment illustrated in FIG. 10, and the specific explanation is omitted.

An image communication apparatus 700 of the sixth embodiment illustrated in FIG.10 is different from the configuration illustrated in FIG. 4 in the point that a video capture section 701, an image area converting section 702, a video encoding section 703, and a transmitting section 704 are provided in addition to the configuration components of FIG. 4.

The video capture section 701 is used to form an image.

The image area converting section 702 converts image data to vertical image data when image data obtained by the video capture section 701 is a transverse format.

The video encoding section 703 provides compression processing of image data, which is opposite to the video decoding section 102, to image data converted by the image area converting section 702. In other words, image data converted by the image area converting section 702 is compressed using the technique such as MPEG (Moving Picture coding Experts Group)-4 and the like in order to improve the efficient use of the band at the time of transmission.

The transmitting section 704 modulates image data coded by the video decoding section 102 and transmits it to the transmission channel.

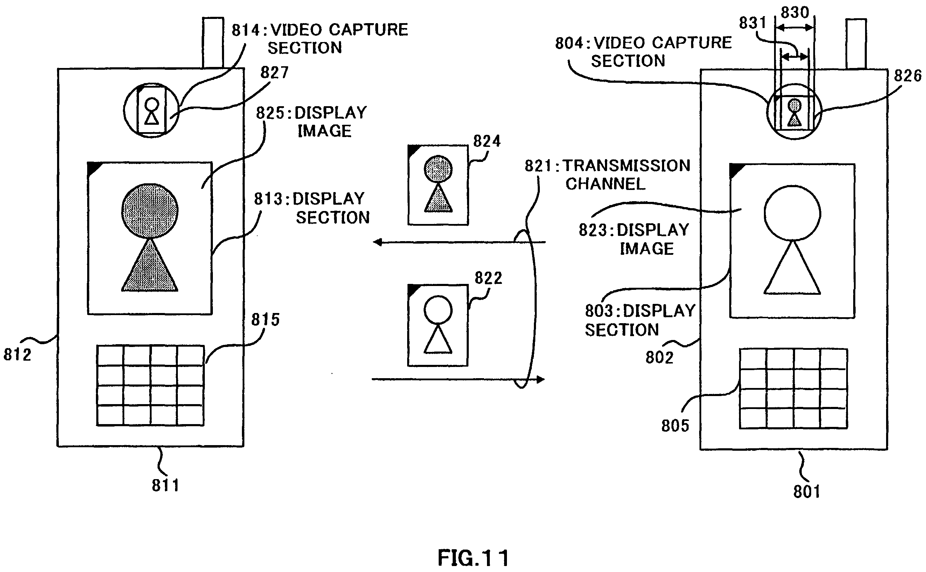

FIG. 11 illustrates the schematic outline configuration of the portable visual telephone apparatus on which the image communication apparatus 700 having the aforementioned internal configuration is mounted.

Namely, a first portable visual telephone apparatus 801 illustrated in FIG. 11 comprises a main body (housing) 802 whose shape is an vertically oblong rectangular solid, a vertical display section 803 corresponding to the display section 104 formed at the upper side of the surface of the main body 802, a video capture section 804 corresponding to the video capture section 701 formed at the upper portion of the display section 803, and a key control section 805 with a plurality of keys formed at the lower portion.

A second portable visual telephone apparatus 811 comprises a main body (housing) 812 whose shape is an vertically oblong rectangular solid, a vertical display section 813 corresponding to the display section 104 formed at the upper side of the surface of the main body 812, a video capture section 814 corresponding to the video capture section 701 formed at the upper portion of the display section 813, and a key control section 815 with a plurality of keys formed at the lower portion.

Moreover, an image 823, which is obtained when a transmission image 822 transmitted from the second portable visual telephone apparatus 811 via a transmission channel 821 is displayed, is displayed on the display section 803 of the first portable visual telephone apparatus 801. Also, an image 825, which is obtained when a transmission image 824 transmitted from the first portable visual telephone apparatus 801 via a transmission channel 821 is displayed, is displayed on the display section 813 of the second portable visual telephone apparatus 811.

Still moreover, the video capture section 804 of the first portable visual telephone apparatus 801 image-forms an object and fetches it as transverse image data. This formed transverse image 826 is shown at the video capture section 804. Also, the video capture section 814 of the second portable visual telephone apparatus 811 image-forms an object and fetches it vertical image data. This formed vertical image 827 is shown at the video capture section 814.

In the above configuration, data of the transverse image 826 (transverse image data) formed by the video capture section 804 is converted to vertical image data to be displayed on the whole area of the vertical display section 813 by the image area converting section 702.

More specifically, data of the transverse image 826 is converted in such a way that both end portions (or one end portion) of the image 826 with a width 830 are cut to have a vertical width 831 and the cut image is displayed.

Vertically oblong image data thus converted is subjected to compression and coding processing by the video encoding section 703, and modulated by the transmitting section 704, and the resultant is transmitted to the second portable visual telephone apparatus 811 via the transmission channel 821 as image data 824.

Since this transmitted image data 824 is a vertical format, this is appropriately displayed on the vertical display section 813 of the second portable visual telephone apparatus 811 as a vertical display image 825.

On the other hand, since the image 827, which is formed and fetched by the video capture section 814 of the second portable visual telephone apparatus 811, is a vertical format, this image is directly transmitted to the first portable visual telephone apparatus 801 and is appropriately displayed on the vertical display section 803 as a vertical image 823.

Thus, according to the image communication apparatus 700 of the sixth embodiment, the transverse image data 826 formed by the video capture section 804 is converted to the vertical image data to be displayed on the whole area of the vertical display section by the image area converting section 702, and the resultant is transmitted. Accordingly, the image communication apparatus at the receiving side can display the received image on the display section in an appropriately state without performing the conversion of image.

### (Seventh embodiment)

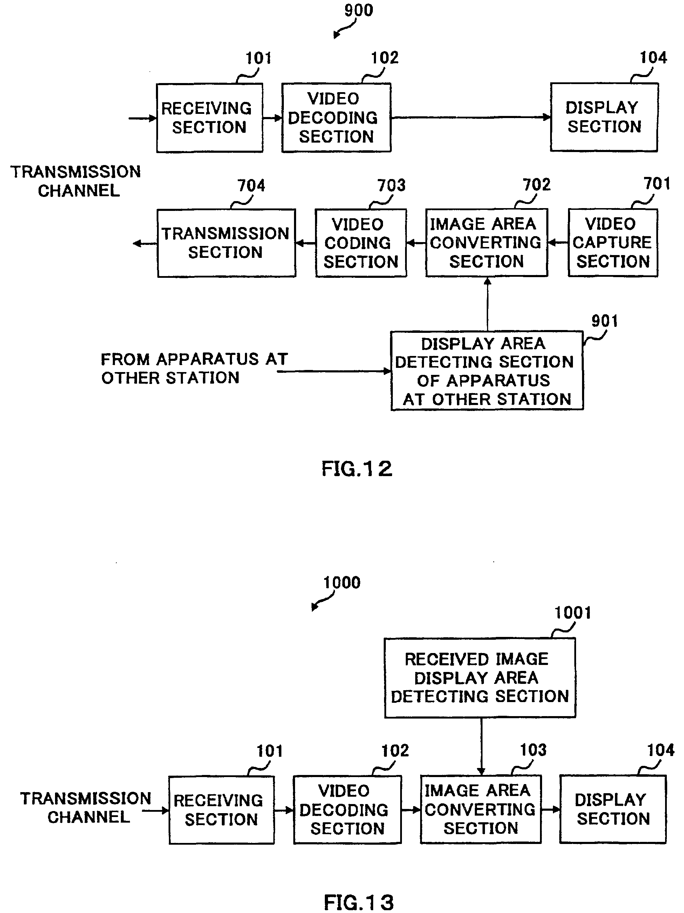

FIG. 12 is a schematic outline configuration view of the image communication apparatus according to the seventh embodiment of the present invention. Additionally, in the seventh embodiment illustrated in FIG. 12, the same reference marks as those of the sixth embodiment illustrated in FIG. 10 are added to the sections corresponding to the respective sections of the sixth embodiment, and the specific explanation is omitted.

An image communication apparatus 900 of the seventh embodiment illustrated in FIG. 12 is different from that of the sixth embodiment illustrated in FIG. 6 in the point that a display area detecting section 901 of the apparatus at the other station is provided in addition to the configuration components of the sixth embodiment. The apparatus at the other station exchanges image data with the image communication apparatus 900. The apparatus at the other station has the display section that displays the image corresponding to image data, and the image corresponding to image data sent from the image communication apparatus 900 is displayed on this display section. Also, the apparatus at the other station generates display format information that indicates whether the display section provided at the apparatus at one station is the vertical format or the transverse format, and transmits it to the image communication apparatus 900 as a control signal.

The display area detecting section 901 of the apparatus at the other station detects the vertical or transverse display format information of the display section of the apparatus at the other station, which is modulated to the control signal and transmitted from the apparatus at the other station, and outputs the detection result to the image area converting section 702.

Namely, when the detected display format is the vertical format, the image area converting section 702 converts the transverse image data formed by the video capture section 701 to the vertical image data, and when it is the transverse format, processing that provides no conversion is carried out.

Thus, the image communication apparatus 900 of the seventh embodiment detects the display format of the display section of the apparatus at the other station and converts the transverse image data formed by the video capture section 701 to the vertical image data when the detected display format is the vertical format, and performs no conversion when it is the transverse format. Accordingly, formed image data can be converted to conform to the display format of the apparatus at the other station and transmission thereof can be carried out.

### (Eighth embodiment)

FIG. 13 is a schematic outline configuration view of the image communication apparatus according to the eighth embodiment of the present invention. Additionally, the same reference marks as those of the configuration illustrated in FIG. 4 are added to the sections corresponding to the respective sections of FIG. 4 in the eighth embodiment illustrated in FIG. 13, and the specific explanation is omitted.

An image communication apparatus 1000 of the eighth embodiment illustrated in FIG.13 is different from the configuration illustrated in FIG. 4 in the point that a received image display area detecting section 1001 is provided in addition to the configuration components of FIG. 4. The apparatus at the other station exchanges image data with the image communication apparatus 1000. The apparatus at the other station generates data kind information that indicates whether image data to be transmitted to the image communication apparatus 1000 is the vertical image data or the transverse image data. The generated data kind information is added to image data and transmitted to the image communication apparatus 1000.

The received image display area detecting section 1001 detects whether the image data is the vertical image data or the transverse image data with reference to data kind information, and outputs the detection result to the image area converting section 103.

Namely, at the time of converting image data decoded by the video decoding section 102, the image area converting section 103 does not perform conversion when the data format detected by the received image display area detecting section 1001 is the same as the display format of the display section 104 of the image communication apparatus 1000 at one station, and performs conversion to conform to the display format of the display section 104 when they are different from each other.

This conversion is performed in such a way that the width of the image 301 in an erect state corresponding to image data is displayed to conform to that of the display area of the display section 302 similar to the second embodiment. Or, the conversion is performed in such away that both end portions (or one end portion) of the transmission image 303 is cut to have a desired width and the width of the image 603 with this cut width is displayed to conform to the width of the display area of the display section 302.

Thus, according to the image communication apparatus 1000 of the eighth embodiment, the format of image data sent from the apparatus at the other station is detected. When the detected data format is the same as the display format of the display section 104 provided in the apparatus at one station, no conversion is performed, and when they are different from each other, conversion is performed to conform to the display format of the display section 104. Accordingly, even when the display format of image data sent from the apparatus at the other station is different from the display format of the display section 104 provided in the apparatus at one station, the received image can be displayed in an appropriate state.

Moreover, the apparatus at the other station according to this embodiment may have the following configuration. Namely, the apparatus at the other station generates information (pixel number information) indicative of the number of pixels of image data to be transmitted, and generated information is added to image data and the resultant is sent to the image communication apparatus 1000. In this case, in the image communication apparatus 1000, the received image display area detecting section 1001 detects the number of pixels of transmitted image data with reference to pixel number information. Further, the image area converting section 103 performs conversion by interpolation in such a way that the number of detected pixels becomes the same as that of the display section 104 of the image communication apparatus 1000 at one station. The image communication apparatus 1000 thus configured can display a clear image on the display section 104.

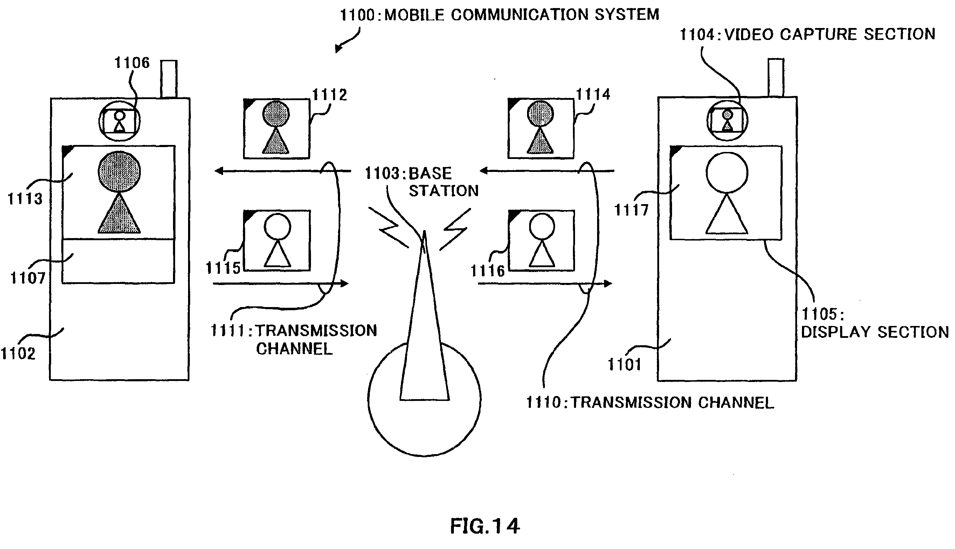

FIG. 14 is a system configuration view illustrating the configuration of a mobile communication system according to a ninth embodiment of the present invention.

A mobile communication system 1100 of the ninth embodiment illustrated in FIG. 14 is composed of a fist image communication apparatus 1101 as a portable visual telephone apparatus, a second image communication apparatus 1102, and a base station 1103. In the mobile communication system according to this embodiment, a transmission format of image data to be transmitted is defined such that only vertical image data is transmitted as image data. An aspect ratio of vertical image data to be transmitted is predetermined in the system. This eliminates the need for converting image data to conform to the display section, making it possible to reduce the load of processing. The reduction in the load of processing can provide the image communication apparatus at low cost.

In the mobile communication system according to this embodiment, the first image communication apparatus 1101 comprises a video capture section 1104 that forms an object and fetches it as transverse image data and a transverse display section 1105. The first image communication apparatus 1102 comprises a video capture section 1106 that forms an object and fetches it as vertical image data and a vertical display section 1107. The aspect ratio of the display section 1105 and that of the display section 1107 are predetermined in the system.

Moreover, the first image communication apparatus 1101 has a function having a receiving section 1201, which demodulates image data received via a transmission channel 1110 to output a bit sequence of received image data, a video decoding section 1202, which decodes the received image data, a video encoding section 1205, which codes image data obtained by the video capture section 1104, and a transmitting section 1206, which transmits coded image data to the transmission channel 1110.

The second image communication apparatus 1102 has the same function as the function explained in the second embodiment. Namely, the second image communication apparatus 1102 has a function of converting image data 1112 in such a way that the width of an image 1113 corresponding to image data 1112 received via a transmission channel 1111 is displayed to conform to that of the display area of the display section 1107 and the image is displayed in an erect state.

In such a configuration, image data 1114, which is formed by the video capture section 1104 provided in the first image communication apparatus 1101 and which is fetched, is transmitted to a base station 1103 via the transmission channel 1110. Image data relayed to the base station 1103 is transmitted to the second image communication apparatus 1102 from the base station 1103 via the transmission channel 1111. The image communication apparatus 1102 receives image data 1112 from the base station 1103 and displays it on the display section 1105.

At this time, though the display section 1107 of the second image communication apparatus 1102 is a vertical type, the image 1113 conforms to the display section 1107 and is displayed thereon since the conversion is performed as mentioned above.

On the other hand, image data 1115, which is formed by the video capture section 1106 provided in the second image communication apparatus 1102 and which is fetched, is transmitted to a base station 1103 via the transmission channel 1111. Image data relayed to the base station 1103 is transmitted to the first image communication apparatus 1101 from the base station 1103 via the transmission channel 1110. The image communication apparatus 1101 receives image data 1116 from the base station 1103 and displays it on the display section 1107.

In this case, since the transverse image data 116 is displayed on the transverse display section 1105, the image 1117 conforms to the display section 1105 and is displayed thereon.

Thus, according to the mobile communication system 1100 of the ninth embodiment, the transmission format of image data to be transmitted is configured such that only transverse image data is transmitted as image data. This eliminates the need for converting image data to conform to the display section, making it possible to reduce the load of processing. The reduction in the load of processing can provide the image communication apparatus at low cost.

Additionally, though the system is configured in such a way to transmit only transverse image data in this embodiment, the system may be configured in such a way to transmit only vertical image in accordance with the content of the service provided by the system or the shape of the display section adopted in the image communication apparatus.

As explained above, according to the present invention, even if received image data is vertical or transverse data format, the upper and lower portions of the image can be conformed to the upper and lower potions of either one of vertical and transverse display means and displayed thereon, and this makes it possible to perform the key operation appropriately.

This application is based on the Japanese Patent Application No.HEI 11-314949 filed on November 5, 1999, entire content of which is expressly incorporated by reference herein Industrial Applicability

The present invention is suitable for use in the field of an apparatus and a method for performing either reception of an image transmitted as a radio signal or radio transmission of the image or both, and is more particularly suitable for use in the filed of an image communication apparatus suitable for use in a mobile station apparatus such as a cellular phone or a portable visual telephone apparatus in a mobile communication system, an information terminal apparatus having a personal computer function and the like and its image communication method.

## Claims

1. An image communication apparatus comprising:
decoding means for decoding coded image data obtained by demodulation after reception;
displaying means for displaying an image corresponding to said decoded image data; and
converting means for converting said decoded image data such that said image is displayed on a display area narrower than a whole display area of said displaying means.

2. An image communication apparatus comprising :
decoding means for decoding coded image data obtained by demodulation after reception;
displaying means for displaying an image corresponding to said decoded image data; and
converting means for converting said decoded image data such that the width of said image is displayed to conform to the width of the display area of said displaying means or the width of said image is displayed to be smaller than the width of the display area of said displaying means.

3. The image communication apparatus according to claim 2, further comprising image pickup means for forming an image, wherein said converting means displays the image formed by said image pickup means on an undisplayed portion of the image corresponding to converted image data at said displaying means.

4. The image communication apparatus according to claim 2, wherein said converting means displays text information on an undisplayed portion of the image corresponding to converted image data at said displaying means.

5. The image communication apparatus according to claim 2, further comprising information receiving means for receiving text information wherein said converting means displays text information received by said information receiving means on an undisplayed portion of the image corresponding to converted image data at said displaying means.

6. An image communication apparatus comprising:
decoding means for decoding coded image data obtained by demodulation after reception;
displaying means for displaying an image corresponding to said decoded image data; and
converting means for converting said decoded image data such that both end portions or one end portion of said image is deleted and the width of the deleted image is displayed to conform to the width of the display area of said displaying means.

7. An image communication apparatus comprising :
image pickup means for forming an image to be conformably displayed on transverse displaying means having a display area whose transverse length is longer than the vertical length;
second converting means for converting said formed transverse image data to vertical image data conformably displayed on vertical displaying means having a display area whose vertical length is longer than the transverse length;
coding means for coding said converted image data; and
transmitting means for transmitting said coded image data.

8. The image communication apparatus according to claim 7, further comprising detecting means for detecting whether the display format of displaying means of the communication apparatus at the other station is vertical or transverse, wherein when the display format detected by said detecting means is vertical, said second converting means converts transverse image data formed by said image pickup means to vertical image data and when said display format is transverse, said second converting means performs no conversion.

9. The image communication apparatus according to claim 7, wherein information for determining said display format is added to a transmission signal in order to detect whether the display format of displaying means of the communication apparatus at the other station is vertical or transverse.

10. The image communication apparatus according to claim 2, further comprising second detecting means for detecting whether display format of image data sent from the image communication apparatus at the other station is vertical or transverse, wherein said converting means performs no conversion when said detected data format is the same as the display format the displaying means of the communication apparatus at one image communication apparatus, and performs conversion to conform to said display format when they are different from each other.

11. The image communication apparatus according to claim 10, wherein a signal indicative of a display format to added to image data itself in order to detect whether said display format of image data sent from the communication apparatus at the other station is vertical or transverse.

12. The image communication apparatus according to claim 10, wherein a signal indicative of a display format to added to a transmission signal in order to detect whether said display format of image data sent from the communication apparatus at the other station is vertical or transverse.

13. The image communication apparatus according to claim 2, wherein said second detecting means detects the number of pixels of image data sent from the communication apparatus at the other station, and said converting means performs conversion such that said detected number of pixels becomes the same as the number of pixels of the displaying means of the image communication apparatus at one station.

14. The image communication apparatus according to claim 1, wherein said converting means performs conversion such that upper and lower portions of the image conform to the upper and lower portions of the displaying means at the time of converting image data.

15. A mobile station apparatus comprising the image communication apparatus described in claim 1.

16. Amobile communication system comprising the mobile station apparatus described in claim 16.

17. A mobile communication system, having a transmission format that transmits only image data with a predetermined aspect radio, wherein image data obtained by forming an object is converted to image data with said ratio, and is transmitted.

18. An image communication method comprising the steps of:
decoding coded image data obtained by demodulation after reception; and
converting said decoded image data such that said image is displayed on a display area narrower than a whole display area at the time of displaying an image corresponding to the decoded image data.

19. An image communication method comprising the steps of :
decoding coded image data obtained by demodulation after reception; and
converting said decoded image data such that the width of said image is displayed to conform to the width of the display area at the time of displaying an image corresponding to the decoded image data.

20. An image communication method comprising the steps of:
decoding coded image data obtained by demodulation after reception; and
converting said decoded image data such that both end portions or one end portion of said image is deleted and the width of the deleted image is displayed to conform to the width of the display area at the time of displaying an image corresponding to the decoded image data.

21. An image communication method comprising the steps of:
forming an image to be conformably displayed on transverse displaying means of transversely oblong;
converting said formed transverse image data to vertical image data conformably displayed on a vertical display area of vertically oblong;
coding said converted image data; and
transmitting said coded image data.

22. The image communication method according to claim 18, wherein conversion is performed such that upper and lower portions of the image conform to the upper and lower portions of the displaying means at the time of converting decoded image data.

23. A mobile communication method wherein when an image communication apparatus, which forms a transverse image whose transverse length is longer than the vertical length and which transmits only transverse image data obtained by said forming to an apparatus at the other station via a base station apparatus, has a vertical display area whose vertical length is longer than the transverse length, said transverse image data is converted such that the width of an image corresponding to said transverse image data is displayed to conform to the width of said display area.
